(19) Europäisches Patentamt
European Patent Office
Office européen des brevets

(11) Numéro de publication: **0 058 104**
**B1**

# (12) FASCICULE DE BREVET EUROPEEN

(45) Date de publication du fascicule du brevet: **10.07.85**

(51) Int. Cl.⁴: **C 08 F 36/04**, C 08 F 4/48, C 08 F 4/56

(21) Numéro de dépôt: **82400082.2**

(22) Date de dépôt: **18.01.82**

(54) **Nouvelles associations des bases résultant de la combinaison d'un alkyl ou aryl lithien avec un amidure ou hydrure alcalin - procédé de polymérisation les utilisant et produit obtenu.**

(30) Priorité: **19.01.81 FR 8100854**

(43) Date de publication de la demande: **18.08.82 Bulletin 82/33**

(45) Mention de la délivrance du brevet: **10.07.85 Bulletin 85/28**

(84) Etats contractants désignés: **DE FR GB**

(56) Documents cités:
**EP - A - 0 007 817**
**FR - A - 1 426 998**
**FR - A - 1 598 017**

(73) Titulaire: **SOCIETE NATIONALE DES POUDRES ET EXPLOSIFS, 12, quai Henri IV, F-75181 Paris Cedex 04 (FR)**

(72) Inventeur: **Lecolier, Serge Louis Marie Bernard, 3 Allée des Cartelines, F-91510 Janville-sur-Juine (FR)**
Inventeur: **Raynal, Serge Fernand, Orée de Sénart Bâtiment Hérédia, F-91210 Draveil (FR)**

**EP 0 058 104 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention a pour objet une nouvelle association de bases résultant de la combinaison de deux bases fortes et son application à la polymérisation anionique, notamment des diènes conjugués.

L'augmentation de la basicité des amidures alcalins quand ils sont associés à des alcoolates ou à des sels alcalins comme le thiocyanate de potassium est bien connue. Les propriétés de ces bases »complexes« sont illustrées par les brevets suivants de la Société déposante: FR 2 352 834 et FR 2 430 428.

Malgré leurs remarquables qualités, en ce qui concerne notamment la polymérisation anionique des dérivés vinyliques, ces bases sont difficilement utilisables pour la polymérisation des diènes conjugués comme le butadiène ou l'isoprène. En outre, il est impossible de former le même complexe en remplaçant les amidures par des hydrures alcalins qui sont des bases dont le pouvoir basique est sensiblement identique.

Il est connu, par ailleurs, d'utiliser des bases fortes comme les alkyls ou aryls lithiens comme amorceurs de polymérisation anionique des diènes conjugués.

Cependant, quand cette polymérisation anionique est effectuée dans un solvant apolaire ou peu polaire (n-hexane, toluène), ce qui est de loin la solution la plus avantageuse, la stéréochimie de la réaction conduit à 90% de structure 1,4 et seulement 10% de structures 1,2 ou 3,4.

On sait qu'il est souhaitable d'accroitre le pourcentage de liaisons vinyliques dans le polymère de manière à augmenter la vitesse de cuisson et les propriétés mécaniques du polymères, notamment en ce qui concerne leur capacité d'amortissement.

Ainsi, pour remédier à ces inconvénients, on a proposé d'effecteur la réaction en présence d'amines tertiaires comme la N,N,N',N'-tétraméthyléthylènediamine. Les propriétés de ces complexes connus sous le nom de complexe de Langer sont illustrées par le brevet GB 1 051 269.

Cette solution, bien qu'intéressante au niveau du laboratoire, est cependant assez onéreuse au plan industriel.

Par ailleurs, les brevets français 1 598 017 et 1 426 998 décrivent la polymérisation de diènes et de monomères vinyliques en présence de composés lithiens et de composés de sodium ou de potassium utilisés comme catalyseurs. Toutefois, les polymères obtenus contiennent en grande partie des structures 1,4, et peu de structures 1,2 ou 3,4.

Un objet de l'invention est de proposer une nouvelle association de deux bases fortes dont le pouvoir basique est supérieur à celui de chacune des deux bases la formant.

Un autre objet de l'invention est l'application de ces nouvelles associations à la polymérisation des diènes conjugués notamment dans des solvants non polaires.

L'association a la formule générale suivante:

$$n'\,R\,Li - n\,MZ$$

dans laquelle:

— n et n' sont les nombres de moles de chaque composé,
— R est un radical alkyle ou aryle,
— M est un métal alcalin choisi parmi le lithium, le sodium ou le potassium,
— Z est un hydrure ou un amidure minéral,

le rapport n/n' étant compris entre 0,2 et 50.

Parmi les radicaux alkyles ou aryles, on peut citer de façon non limitative les radicaux méthyl, éthyl, n-propyl, isopropyl, n-butyl, isobutyl, t-butyl, n-amyl, n-hexyl, n-octyl, n-decyl; 2-butenyl, cyclopentyl-méthyl, cyclohexyl-éthyl, cyclopentyl-ethyl, methyl-cyclopentyl-ethyl; 4-cyclohexenyl-ethyl; 2-phenylethyl, 2-phenylpropyl, methylnaphthyl; cyclopentyl, cyclohexyl; methylcyclopentyl, dimethylcyclopentyl, ethylcyclopentyl, méthylcyclohexyl, dimethylcyclohexyl, ethylcyclohexyl, isopropylcyclohexyl, 5-cyclopentadienyl; phenylcyclopentyl, phenylcyclohexyl, phenyl, tolyl, xylyl, ethylphenyl, naphthyl, methylnaphthyl, dimethylnaphthyl, ethylnaphthyl et cyclohexylphenyl.

De manière préférentielle on préférera comme radicaux alkyles ceux contenant 2 à 8 atomes de carbone et particulièrement le butyl.

Comme radicaux aryles, on préfèrera le phényle ou le naphtyle.

Le métal alcalin de l'hydrure ou de l'amidure doit être de préférence le sodium ou le potassium de manière à créer un effet de cation avantageux. Le sodium est le cation préféré.

Les amidures minéraux alcalins, comme les hydrures alcalins sont des bases très fortes dont le pouvoir basique est sensiblement équivalent.

Dans l'échelle de basicité, on a en effet les composés suivants dans l'ordre décroissant:

$$MH > MNH_2 > \varphi_3COM > \varphi_3COM > EtOM.$$

On préfèrera, toutefois, l'amidure alcalin à cause des résultats sensiblement supérieurs qui sont obtenus avec ces derniers, en ce qui concerne la polymérisation anionique.

Il faut souligner que les amidures alcalins utilisés dans l'invention sont minéraux et que l'atome d'azote n'est pas substitué par un radical organique.

Bien que le rapport n/n' puisse varier de manière considérable, il est préférable qu'il soit égal ou supérieur à 1 et plus particulièrement compris entre 1 et 25 à cause notamment du taux supérieur de structures vinyliques obtenues.

Ces associations se présentent sous forme d'agrégats parfaitement isolables du milieu dans lequel elles ont été formées.

Il s'agit donc bien d'un produit bien défini et non pas d'une forme fugitive et instable d'association. Ces complexes ont pu être conservés pendant 15 jours sans révéler d'altération en ce qui concerne leurs propriétés.

La mesure de la basicité qui a été effectuée en milieu organique pour certaines de ces associations a montré qu'il y avait un effet de synergie tout à fait surprenant.

On obtient l'échelle de basicité suivante:

RLi — MZ > MZ > RLi

Sans être liés par une quelconque théorie, on peut penser que les agrégats sont, par exemple pour l'association n-BuLi-$NaNH_2$, sous la forme suivante:

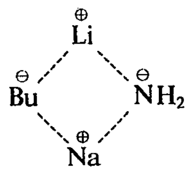

et plus généralement:

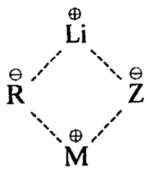

La formation de ces associations, et c'est encore un intérêt supplémentaire de l'invention, est très rapide, pratiquement instantanée, à température ambiante.

Il suffit de l'effectuer sous atmosphère inerte et en absence d'humidité.

Un procédé pour obtenir les associations de l'invention consiste à faire réagir l'amidure ou l'hydrure alcalin en solution ou non dans un solvant, avec l'organométallique introduit sous gaz inerte ou sous vide. La réaction est très rapide à 25° C.

La réaction peut également être effectuée à plus basse température. Dans ce cas, toutefois, le temps de complexation est plus long. Par contre, à température plus élevée la réaction est instantanée.

Il est évident que d'autres procédés peuvent également être utilisés et notamment en inversant l'ordre d'introduction des réactifs dans le ballon.

Les solvants utilisables pour préparer les amorceurs selon l'invention doivent être aprotiques et peuvent être polaires, faiblement polaires ou apolaires. On peut utiliser des solvants polaires pour autant que leur structure ne les rendent pas susceptibles à l'action des associations selon l'invention. Ainsi le diméthylsulfoxyde (DMSO), le diméthyl formamide (DMF) sont dégradés par les associations et doivent, de préférence, être évités.

Toutefois, et c'est là un autre avantage de l'invention, ces associations peuvent être préparées très facilement dans un solvant apolaire ou faiblement polaire comme le toluène ou les composés comportant des doubles ou triples liaisons.

Cet avantage sera encore plus évident lors de l'application à la polymérisation anionique de ces associations qui sera décrite ciaprès.

En effet, une application particulièrement intéressante des bases selon l'invention consiste à les utiliser comme amorceurs de polymérisation anionique.

A cet égard, il convient de bien discerner entre la polymérisation anionique pure dont il est question dans tout ce qui suit et la polymérisation anionique coordinée qui fait intervenir des amorceurs tels que les sels d'aluminium, d'antimoine et des métaux de transition (par exemple les catalyseurs bimétalliques dits Ziegler-Natta) et qui est sans rapport avec le domaine ou s'exerce l'invention.

Les associations peuvent être utilisées pour amorcer la polymérisation de tous les monomères susceptibles de polymériser anioniquement par ouverture d'une double liaison éthylénique ou d'un hétérocycle parmi lesquels on peut citer les monomères éthyléniques comme les styrène ou le méthacrylate de méthyle, les monomères hétérocycliques et les diènes comme l'isoprène ou le butadiène.

Ces monomères sont bien connus de l'homme de métier et sont notamment décrits dans le brevet FR 2 410 005.

Ces associations sont toutefois particulièrement intéressantes pour amorcer la polymérisation anionique des diènes conjugués. En effet, les amidures ou hydrures alcalins ont un pouvoir d'exaltation étonamment prononcé à l'égard des alkyl ou aryl lithiens en tant qu'amorceurs de polymérisation anionique. Cet effet de synergie apporte des améliorations en ce qui concerne la vitesse de réaction, la nature du solant qui est possible d'utiliser et le pourcentage supérieur de structures vinyliques présentes dans le polymère final.

Sur ces deux derniers points, particulièrement importants, il faut bien souligner le fait suivant: le butyllithium existe sous la forme d'hexamère qui est inerte en ce qui concerne la polymérisation anionique. Quand on utilise un solvant non polaire, cette forme hexamère est très faiblement et lentement dissociée, ce qui explique la structure du produit obtenu. Les solvants polaires, comme le tétrahydrofuranne (THF), par contre, dissocient très rapidement la forme hexamère ce qui permet l'action très rapide du butyl lithium dans ce cas et la structure vinylique du produit obtenu. Le fait d'associer un amidure ou hydrure alcalin au butyl lithium permet certes de dissocier la forme hexamère et d'entrainer le même effet que le THF mais, en outre, cet effet est beaucoup plus accentué et le pourcentage de structures vinyliques obtenu est encore supérieur, ce qui illustre la fonction nouvelle de l'association. Il ne s'agit donc pas d'une simple dissociation de la forme hexamère.

Ces bases permettent, en outre, la synthèse de polymères vivants, ce qui a pour conséquence leur application à la synthèse de copolymères séquencés (par exemple, styrène, diène).

Une deuxième conséquence est la relation de proportionnalité entre le degré de polymérisation et la concentration en monomère. Nous avons donc une relation linéaire $\overline{DPn} = k(M)$, $\overline{DPn}$ étant le degré de polymérisation en nombre et étant égal à (M)/(C), (C) correspondant à la concentration de catalyseur, (M) étant la concentration en quantité de monomère. Dans ce cas, la masse est proportionnelle à la quantité d'alkyl ou d'aryl lithien présent. Cette propriété n'est valable que pour les monomères qui ne polymérisent pas directement avec l'amidure alcalin.

Bien que toutes les bases de la présente invention conviennent pour l'application à la polymérisation anionique, il a été trouvé qu'il était avantageux d'utiliser des bases dont le métal de l'amidure ou hydrure alcalin est le potassium ou le sodium. On obtient ainsi un effet de cation très favorable. Plus particulièrement, il est très avantageux d'utiliser l'amidure ou l'hydrure de sodium.

Le rapport

$$\frac{n}{n'} = \frac{\text{Amidure ou hydrure alcalin}}{\text{alkyl ou aryl lithien}}$$

est compris entre 0,2 et 50, de préférence supérieur ou égal à 1 et plus particulièrement compris entre 1 et 25.

Le procédé pour mettre en œuvre cette application consiste à ajouter, sur la base préformée, le monomère en solvant ou non qui doit être polymérisé. A température ambiante la réaction est instantanée et on peut noter une forte élévation de la température.

Le solvant qui peut être utilisé peut être le même que celui utilisé pour la formation des bases selon l'invention mais peut être également différent.

Il est évident qu'un des grands intérêts de l'invention consiste à utiliser des solvants non polaires. La température de réaction est de préférence comprise entre —10° et +40°C, de manière à obtenir la vitesse maximum tout en évitant les réactions secondaires.

La réaction est terminée par addition d'eau ou d'alcool.

L'analyse de la microstructure obtenue montre que l'addition s'est effectuée à plus de 70%, et même dans le cas de $NaNH_2$ à plus de 97%, en 1.2 et 3.4 pour l'isoprène.

Les exemples qui suivent illustrent l'invention.

## Preparation des Associations

### 1. Préparation de l'association $NaNH_2$—BuLi

Dans un ballon maintenu sous atmosphère d'argon à température ambiante on introduit $25 \cdot 10^{-3}$ mole de $NaNH_2$ dans 30 ml de toluène et $6 \cdot 10^{-3}$ mole de BuLi. La réaction s'effectue en trois minutes et on peut noter une forte élévation de la température. On procède de la même façon avec $2 \cdot 10^{-3}$ mole de BuLi.

### 2. Préparation de l'association NaH—BuLi

De la même façon que précédemment on introduit dans un ballon réactionnel $25 \cdot 10^{-3}$ mole de NaH et 35 ml de toluène puis $2 \cdot 10^{-3}$ mole de BuLi. La réaction est effectuée en trois minutes à température ambiante.

3. Préparation de l'association NaH- $\varphi$ Li

En opérant de la même façon que précédemment, on obtient le produit final.

4. Les associations suivantes ont été en outre préparées: BuLi-$KNH_2$, BuLi-$LiNH_2$.

5. Les mêmes produits que ceux cités dans les exemples ci-dessus sont obtenus dans les mêmes conditions mais en utilisant comme solvant le tétrahydrofuranne.

## Polymerisation Anionique

### 1. Polymérisation de l'isoprène par l'association amidure alcalin-n-butyl lithium

a) Ces essais sont effectués avec des associations obtenues avec $25 \cdot 10^{-3}$ mole d'amidure alcalin et $2 \cdot 10^{-3}$ mole de n-BuLi dans 35 ml de solvant.

On introduit ensuite $10^{-1}$ mole d'isoprène.

Après 10 min de temps de latence, la polymérisation s'effectue très rapidement. On arrête la réaction au bout de 15 min en introduisant du méthanol. Le polymère formé est ensuite précipité dans le méthanol, filtré et séché sous vide. Le rendement est de 100%.

Les résultats selon les solvants et les bases utilisés sont résumés dans le tableau ci-dessous.

| Association | THF<br>% 1.4 | % 1.2 | % 3.4 | Toluène<br>% 1.4 | % 1.2 | % 3.4 |
|---|---|---|---|---|---|---|
| n-BuLi<br>$LiNH_2$ | 18 | 18 | 64 | 91 | 0 | 9 |
| n-BuLi<br>$KNH_2$ | 33 | 28 | 39 | 49 | 16 | 35 |
| n-BuLi<br>$NaNH_2$ | 9 | 23 | 68 | 17 | 27 | 56 |

b) Un essai dans 35 ml de THF avec $3 \cdot 10^{-2}$ mole d'isoprène, $2 \cdot 10^{-3}$ mole de n-BuLi et $25 \cdot 10^{-3}$ mole d'amidure alcalin a donné le résultat suivant:

| Rendement | % 1.4 | % 1.2 | % 3.4 |
|---|---|---|---|
| 100% | 6 | 30 | 64 |

c) Un essai effectué dans les mêmes conditions que le précédent mais avec simplement n-BuLi a donné le résultat suivant:

| Rendement | % 1.4 | % 1.2 | % 3.4 |
|---|---|---|---|
| 100% | 14 | 27 | 59 |

## 2. Polymérisation de l'isoprène par les associations NaH-nBuLi et NaH- φ Li

Le mode opératoire est le même que pour l'exemple 1. Les associations sont obtenues avec $25 \cdot 10^{-3}$ mole de NaH et $6 \cdot 10^{-3}$ mole de nBuLi ou φ Li dans 35 ml de toluène.
On introduit $10^{-1}$ mole d'isoprène.
Le rendement est de 100% après 15 min.
Les résultats sont résumés dans le tableau ci-dessous.

| Association | % 1.4 | % 1.2 | % 3.4 |
|---|---|---|---|
| NaH n-BuLi | 34,4 | 11,4 | 54,2 |
| NaH- φ Li | 27,5 | 16 | 56,5 |

## 3. Influence du rapport amidure de sodium/butyl lithium pour une quantité donnée d'amidure de sodium

| $r = \frac{(NaNH_2)}{(nBuLi)}$ | % 1.4 | % 1.2 | % 3.4 |
|---|---|---|---|
| 0,4 | 12 | 30 | 58 |
| 0,8 | 17 | 28 | 55 |
| 1,56 | 16 | 27 | 57 |
| 12,5 | 17 | 27 | 56 |
| 25 | 20 | 25 | 55 |

## 4. Essais comparatifs

Dans les mêmes conditions opératoires suivantes: monomère $10^{-1}$ mole, catalyseur $6 \cdot 10^{-3}$ mole, la polymérisation de l'isoprène amorcée par le butyllithium et le phényl lithium utilisés sans activant, donne des polymères de structure différente et un taux de conversion plus faible.

| Amorceur | Solvant | Temps de polymérisation | Rdt | Structure 1.4 | 1.2 | 3.4 |
|---|---|---|---|---|---|---|
| n BuLi | $PhCH_3$ | 15 min | 20 | 90 | 0 | 10 |
| PhLi | $PhCH_3$ | 15 min | 23 | 75 | 0 | 25 |

## 5. Polymérisation de l'isoprène en masse

L'association $NaNH_2$-n-BuLi est préparée dans le toluène à partir de $25 \cdot 10^{-3}$ mole d'amidure alcalin et $2 \cdot 10^{-3}$ mole de n-BuLi. Le toluène est ensuite évaporé.
On introduit ensuite $10^{-1}$ mole d'isoprène.
On obtient les résultats suivants:

| Rendement | % 1.4 | % 1.2 | % 3.4 |
|---|---|---|---|
| 100% | 10 | 25 | 65 |

6. Polymérisation du butadiène avec n-BuLi-$NaNH_2$

Les essais sont effectués dans les mêmes conditions (n-BuLi 2 · $10^{-3}$ mole, $NaNH_2$ 25 · $10^{-3}$ mole)

| Solvant | Temps de réaction | Rendement | % 1.2 | % 1.4 |
|---|---|---|---|---|
| φMe | 10 min | 100 | 86 | 14 |
| THF | 10 min | 100 | 90 | 10 |

Un essai semblable effectué dans le THF avec n-BuLi seulement et dans les mêmes conditions opératoires donne les résultats suivants:

| | |
|---|---|
| Temps de réaction | 15 heures |
| Rendement | 100% |
| % 1.2 | 77 |
| % 1.4 | 23 |

7. Copolymérisation du styrène et du butadiène avec $NaNH_2$-n-BuLi

Dans un ballon dans lequel a été formé l'association $NaNH_2$-n-BuLi dans le toluène (respectivement 25 · $10^{-3}$ mole et 2 · $10^{-3}$ mole), on introduit 5 · $10^{-3}$ mole de styrène (5 $cm^3$). Après 10 minutes de réaction on introduit 5 · $10^{-3}$ mole d'isoprène.

Après 10 minutes, le rendement est de 100% et on obtient le copolymère styrène-isoprène.

8. Polymérisation du méthacrylate de méthyle par $NaNH_2$-n-BuLi

De la même manière que pour les exemples précédents, sur l'association préparée en solvant à partir de 25 · $10^{-3}$ mole de $NaNH_2$ et 2 · $10^{-3}$ mole de n-BuLi, on ajoute 5 · 64 · $10^{-2}$ mole du monomère.

Selon les solvants, on obtient les résultats suivants:

| Solvant | $\overline{Mn}$ | $\overline{Mp}$ | I |
|---|---|---|---|
| Hexane | 29 000 | 52 000 | 1.8 |
| Toluène | 22 500 | 105 000 | 4,7 |
| Dioxanne | 19 000 | 86 000 | 4,5 |
| D. M. E. | 32 000 | 85 000 | 2,7 |
| T. H. F. | 15 000 | 22 000 | 1,5 |
| En masse | 21 000 | 150 000 | 7,1 |

$\overline{Mn}$: Masse en nombre.
$\overline{Mp}$: Masse en poids.
I: Indice de polydispersité.

Selon les associations, on obtient les résultats suivants, les proportions d'hydrure et d'amidure étant identiques.

| | $\overline{Mn}$ | $\overline{Mp}$ | I |
|---|---|---|---|
| NaH-n Buli | 19 000 | 170 000 | 8,9 |
| $NaNH_2$-MeLi | 94 000 | 510 000 | 5,4 |
| $NaNH_2$-Li | 16 000 | 91 000 | 5,7 |

**Revendications**

1. Association de bases de formule générale suivante:

n' RLi-n MZ

dans laquelle:

- n et n' sont les nombres de moles de chaque composé,
- R est un radial alkyle ou aryle,
- M est un métal alcalin choisi parmi le lithium, le sodium ou le potassium,
- Z est un hydrure ou un amidure minéral,

le rapport n/n' étant compris entre 0,2 et 50.

2. Association selon la revendication 1 caractérisée en ce que le rapport n/n' est compris entre 1 et 25.

3. Association selon la revendication 1, caractérisée en ce que le métal alcalin M est différent du lithium.

4. Association selon la revendication 3 caractérisée en ce que le métal alcalin M est le sodium.

5. Association selon la revendication 4, caractérisée en ce que R est un radial butyl ou phényle.

6. Association selon la revendication 5, caractérisée en ce qu'elle est choisie parmi $NaNH_2$-n BuLi et NaH-n BuLi.

7. Procédé de polymérisation ou de copolymérisation de monoméres vinyliques, hétérocycliques ou diéniques susceptibles de polymériser anioniquement par ouverture d'une double liaison éthylénique ou d'un hétérocycle caractérisé en ce qu'on amorce lesdits monomères en présence ou non d'un solvant, à l'aide d'une association de bases selon l'une des revendications 1 à 5.

8. Procédé de polymérisation selon la revendication 7, caractérisé en ce que le monomère est un diène conjugé.

9. Procédé de polymérisation selon la revendication 8, caractérisé en ce que le monomère est l'isoprène.

10. Procédé de polymérisation selon la revendication 7, caractérisé en ce que le solvant est apolaire ou faiblement polaire.

11. Procédé de polyméridation selon la revendication 10, caractérisé en ce que le solvant est le monomère à polymériser.

12. Procédé de polymérisation selon la revendication 7, caractérisé en ce que la température de polymérisation est comprise entre −10 et +40° C.

13. Procédé de polymérisation selon la revendication 7, caractérisé en ce que la base est formée d'amidure de sodium et d'alkyl ou aryl lithien.

14. Polymère obtenu selon le procédé de l'une des revendications 7 à 13.

## Patentansprüche

1. Neues Assoziat von Basen der allgemeinen Formel

n' RLi-n MZ

worin:

- n und n' die Molzahlen jedes Bestandteils sind,
- R ein Alkyl- oder Arylrest ist,
- M ein unter Lithium, Natrium und Kalium gewähltes Alkalimetall ist,
- Z ein Alkalimetallhydrid oder -amin ist,

und das Verhältnis n/n' von 0,2 bis 50 beträgt.

2. Neues Assoziat nach Anspruch 1, dadurch gekennzeichnet, daß das Verhältnis n/n' von 1 bis 25 beträgt.

3. Neues Assoziat nach Anspruch 1, dadurch gekennzeichnet, daß das Alkalimetall M kein Lithium ist.

4. Neues Assoziat nach Anspruch 3, dadurch gekennzeichnet, daß das Alkalimetall M Natrium ist.

5. Neues Assoziat nach Anspruch 4, dadurch gekennzeichnet, daß R ein Butyl- oder Phenylrest ist.

6. Neues Assoziat nach Anspruch 5, dadurch gekennzeichnet, daß es unter $NaNH_2$-n BuLi und NaH-n BuLi ausgewählt wird.

7. Verfahren zur Polymerisation oder Copolymerisation von Vinylmonomeren, heterozyklischen Monomeren oder Dienmonomeren, die anionisch durch Öffnung einer ethylenischen Bindung oder eines Heterozyklus anionisch polymerisiert werden können, dadurch gekennzeichnet, daß die Monomeren in Gegenwart oder in Abwesenheit eines Lösungsmittels unter Verwendung eines Assoziats von Basen gemäß einem der Ansprüche 1 bis 5 umgesetzt werden.

8. Polymerisationsverfahren nach Anspruch 7, dadurch gekennzeichnet, daß als Monomer ein konjugiertes Dien verwendet wird.

9. Polymerisationsverfahren nach Anspruch 8, dadurch gekennzeichnet, daß als Monomer Isopren verwendet wird.

10. Polymerisationsverfahren nach Anspruch 7, dadurch gekennzeichnet, daß ein apolares oder schwach-polares Lösungsmittel verwendet wird.

11. Polymerisationsverfahren nach Anspruch 10, dadurch gekennzeichnet, daß als Lösungsmittel das zu polymerisierende Monomer verwendet wird.

12. Polymerisationsverfahren nach Anspruch 7, dadurch gekennzeichnet, daß die Polymerisation bei einer Temperatur von $-10$ bis $+40°$ C durchgeführt wird.

13. Polymerisationsverfahren nach Anspruch 7, dadurch gekennzeichnet, daß das Assoziat aus Natriumamin und Alkyl- oder Aryllithium hergestellt wird.

14. Polymer, hergestellt in dem Verfahren gemäß einem der Ansprüche 7 bis 13.

## Claims

1. New association of bases, of the following general formula:

n' RLi — n MZ in which:

- n and n' are the numbers of moles of each compound,
- R is an alkyl or aryl radical,
- M is an alkali metal chosen from amongst lithium, sodium or potassium and
- Z is a hydride or an inorganic amide,

the ratio n/n' being between 0.2 and 50.

2. New association according to Claim 1, characterised in that the ration n/n' is between 1 and 25.

3. New association according to Claim 1, characterised in that the alkali metal M is different from lithium.

4. New association according to Claim 3, characterised in that the alkali metal M is sodium.

5. New association according to Claim 4, characterised in that R is a butyl or phenyl radical.

6. New association according to Claim 5, characterised in that it is chosen from amongst $NaNH_2$-n-BuLi and NaH-n-BuLi.

7. Process for the polymerisation or copolymerisation of vinyl, heterocyclic or diene monomers capable of undergoing anionic, polymerisation by the opening of an ethylenic double bond or a heterocyclic ring, characterised in that said monomers are initiated, in the presence or absence of a solvent, with the aid of an association of bases according to one of Claims 1 to 5.

8. Polymerisation process according to Claim 7, characterised in that the monomer is a conjugated diene.

9. Polymerisation process according to Claim 8, characterised in that the monomer is isoprene.

10. Polymerisation process according to Claim 7, characterised in that the solvent is apolar or weakly polar.

11. Polymerisation process according to Claim 10, characterised in that the solvent is the monomer to be polymerised.

12. Polymerisation process according to Claim 7, characterised in that the polymerisation temperature is between −10 and +40° C.

13. Polymerisation process according to Claim 7, characterised in that the base is formed from sodium amide and a lithium alkyl or aryl.

14. Polymer obtained in accordance with the process of one of Claims 7 to 13.